# EUROPEAN PATENT SPECIFICATION

(11) **EP 1 820 697 B1**
(45) Date of publication and mention of the grant of the patent: **03.06.2009**
(21) Application number: 06425102.8
(22) Date of filing: 20.02.2006
(51) Int. Cl.: B60R 9/04

(54) **System for securing multi-purpose bars for vehicles**
Vorrichtung zur Befestigung Mehrzweck-Querstangen für Fahrzeuge
Système d'attache de barres multi-usage pour véhicules

(43) Date of publication of application: 22.08.2007
(73) Proprietor: Aurilis Group Italia S.R.L., 12045 Fossano (CN) (IT)
(72) Inventor: Gemesio, Matteo, 12045 Fossano (CN) (IT)
(74) Representative: Garavelli, Paolo

(56) References cited:
- EP-A- 0 945 307
- EP-A- 1 136 323
- WO-A-96/31366
- FR-A- 2 752 793

## Description

The present invention refers to a securing system of multi-purpose bars, such as, for example, baggage carriers, ski racks, etc, for vehicles, such vehicles being equipped in particular with arrangements shaped as a ball pawl.

As known, there are multi-purpose bars to be fixed onto vehicle roofs which perform numerous functions, such as, for example, baggage carriers or ski racks.

It is also known that currently motor vehicle roofs are equipped, already when manufacturing them, with at least four seats or arrangements aimed to secure multi-purpose bar feet, these seats being of various shapes and sizes, to which obviously the multi-purpose bar feet must be able to be suited.

WO-A-96/31366 discloses a system according to the preamble of claim 1.

It is therefore clear that the art evolves to propose systems which are easily, practically and quickly interfaced with such seats in order to allow a safe and easy securing of multi-purpose bars to motor vehicle roof.

Therefore, object of the present invention is providing a securing system of multi-purpose bars, for vehicles equipped in particular with arrangements on the roof shaped as a ball pawl, which allows the safe and easy fixing of multi-purpose bars themselves.

The above and other objects and advantages of the invention, as will appear from the following description, are reached with a securing system of multi-purpose bars for vehicles as claimed in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1 shows an exploded perspective view of some components of the securing system according to the present invention during one of its assembling steps;
- FIG. 2 shows a side perspective view of the assembled components of FIG. 1;
- FIG. 3 shows a side perspective view of other components of the securing system according to the present invention in another of its assembling steps;
- FIG. 4 shows a side perspective view of the securing system according to the present invention in a further one of its assembling steps; and
- FIG. 5 shows a side perspective view of the securing system of FIG. 4 in another of its assembling steps.

The following description of components of the system according to the present invention and their use and assembling modes will be provided, for obvious briefness reasons, with reference to only one arrangement being present on the vehicle roof, being it evident that the same considerations are valid for all other arrangements which can be found (generally a total of four).

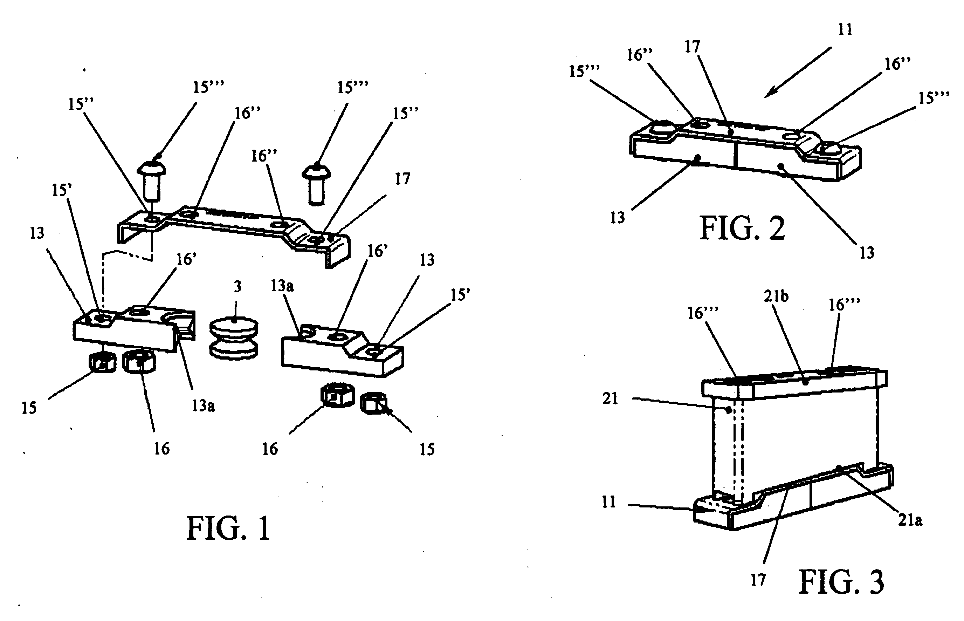

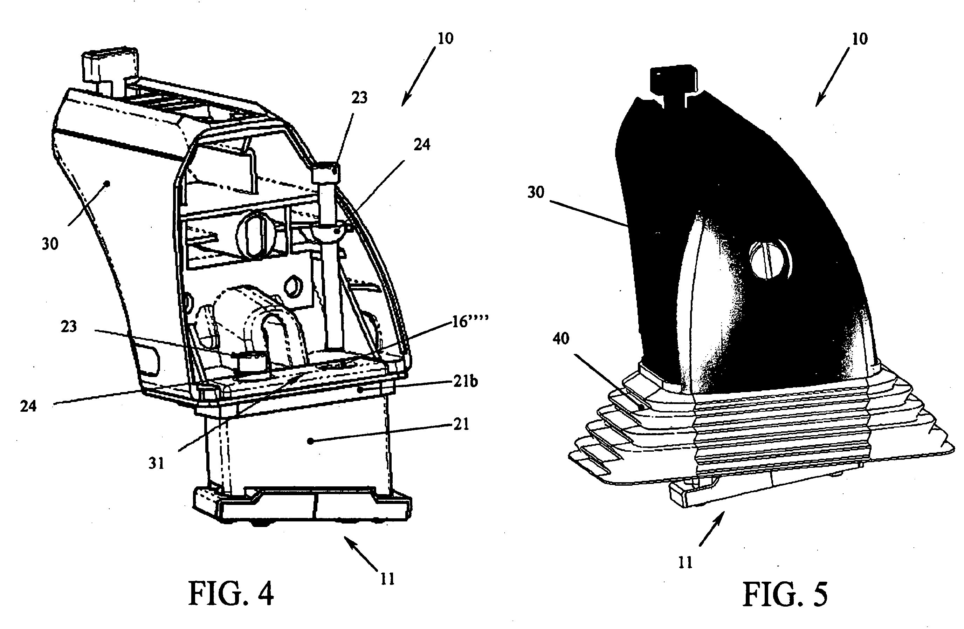

With reference therefore to the Figures, it is possible to note that the system 10 for securing multi-purpose bars for vehicles, in particular equipped with arrangements shaped as a ball pawl 3 comprises (obviously with reference to a single one of such arrangements 3):
- a fixing base 11 adapted to remain fixed to the ball pawl 3: with particular reference to FIG. 1 and 2, it is possible to note that, in a preferred embodiment thereof, such fixing base 11 is composed of at least two jaws 13, each one of such jaws 13 having in an end thereof a seat 13a which is complementary to at least one part of the ball pawl 3 shape; the jaw 13 is further equipped in a lower face thereof with at least one first housing seat of at least one first securing nut 15 and at least one second housing seat of at least one second securing nut 16, such first and second housing seat being preferably with a shape (generally hexagonal) and size which are equal to those of securing nuts 15, 16 to be housed so that their rotation inside the housing seats is prevented. Moreover, the first and second housing seat correspond to respective first 15' and second 16' through holes going out of an upper face of the jaw 13. In particular, it is preferable that the first securing nut 15 is of the M5 type and that the second securing nut 16 is of the M6 type. Moreover, the fixing base 11 comprises a fixing plate 17 of the jaws 13 around the ball pawl 3, such fixing plate 17 being equipped with first 15" and second 16" through holes coinciding with the first 15' and second 16' through holes of the jaws 13. The fixing plate 17 is therefore secured onto the jaws 13 around the ball pawl 3 through at least two first screws 15"' which pass through the first through holes 15" of the fixing plate 17 and the first through holes 15' of the jaws 13 in order to be screwed onto the respective first securing nut 15. Obviously, and in compliance with the preferred type of first securing nut 15, the first screws 15"' are preferably of the M5 type;
- at least one supporting socket 21 (like the one shown in FIG. 3), such socket having a lower surface 21a adapted to abut onto the fixing base 11, in particular onto its own fixing plate 17, and an upper surface 21a adapted to support a foot of the multi-purpose bars described below. The supporting socket 21 is then equipped with third through holes 16"' coinciding with the second through holes 16" of the fixing plate 17, and then with the second through holes 16' of the jaws 13 when such supporting socket 21 is operatively arranged on the fixing plate 17 of the fixing base 11;
- a foot 30 of a multi-purpose bar (like the one shown in FIG. 4 and 5) having an abutment seat 31 at least onto the upper surface 21a of the supporting socket 21, such abutment seat 31 being equipped with fourth through holes 16"" coinciding with the third through holes 16''' of the supporting socket 21, and then with the second through holes 16" of the fixing plate 17 and the second through holes 16' of the jaws 13 when the abutment seat 31 is operatively arranged on the upper surface 21b of the supporting socket 21. The foot 30 is then secured to the fixing base 11 through at least two second screws 23 which, passing through the fourth through holes 16'''' of the foot 30, the third through holes 16''' of the supporting socket 21, the second through holes 16" of the fixing plate 17 and the second through holes 16' of the jaws 13, gets screwed to the respective second securing nut 16, possibly by interposing at least one hemispheric washer 24. Similarly to what has been stated above and in compliance with the preferred type of the second securing nut 16, the second screws 23 are preferably of the M6 type.

Possibly, in order to cover the set of components once assembled and to give it a better aesthetic appearance, the system 10 according to the present invention can also comprise a covering casing 40, preferably made as an elastic bellows to be inserted onto the foot 30 to cover at least the supporting socket 21.

In order to assemble the system 10 of the present invention as previously decribed, it is therefore enough to:
- assemble the fixing base 11 around the ball pawl 3: in particular, for realising such step, it is necessary to place the first 15 and second 16 securing nut in their respective first and second housing seat, arrange the jaws 13 with their respective seats 13a around the ball pawl 3, arrange the fixing plate 17 onto the jaws 13 and screw the two first screws 15"', passing through the first through holes 15" of the fixing plate 17 and the first through holes 15' of the jaws 13, to the respective first securing nuts 15;
- positioning the supporting socket 21 with its lower surface in abutment onto the fixing plate 17 of the fixing base 11;
- positioning the foot 30 with its abutment seat 31 over the upper surface 21b of the supporting socket 21;
- inserting the two second screws 23 through the fourth through holes 16"" of the abutment seat 31, the third through holes 16"' of the supporting socket 21, the second through holes 16" of the fixing plate 17 and the second through holes 16' of the jaws 13, possibly by interposing the respective hemispheric washers 24 and screwing such two second screws 23 to the respective second securing nuts 16;
- possibly recovering at least the supporting socket 21 by inserting the covering casing on the foot 30.

## Claims

1. System (10) for securing multi-purpose bars for vehicles, in particular equipped with arrangements shaped as a ball pawl (3), comprising:
- a fixing base (11) adapted to remain fixed to said ball pawl (3), said fixing base (11) being composed of at least two jaws (13), each one of said jaws (13) having in an end thereof a seat (13a) complementary to at least part of the shape of said ball pawl (3), each one of said jaws (13) being equipped in a lower face thereof with at least one first housing seat of at least one first securing nut (15) and at least one second housing seat of at least one second securing nut (16), said first and second housing seats corresponding to respective first (15') and second (16') through holes going out of an upper face of said jaw (13), said fixing base (11) comprising a fixing plate (17) of said jaws (13) around said ball pawl (3), said fixing plate (17) being equipped with first (15") and second (16") through holes coinciding with said first (15') and second (16') through holes of said jaws (13);
- at least one supporting socket (21) adapted to abut onto said fixing base (11); and
- a foot (30) of said multi-purpose bar having an abutment seat (31) onto at least one upper surface (21b) of said supporting socket (21), said foot (30) being secured to said fixing base (11) by interposing said supporting socket (21);
**characterised in that**:
- said supporting socket (21) is equipped with third through holes (16"') coinciding with said second through holes (16") of said fixing plate (17) and with said second through holes (16') of said jaws (13);
- said abutment seat (31) is equipped with fourth through holes (16"") coinciding with said third through holes (16"') of said supporting socket (21); and
- said foot (30) is secured to said fixing base (11) through at least two second screws (23) passing through said fourth through holes (16""), said third through holes (16"') of said supporting socket (21), said second through holes (16") of said fixing plate (17) and said second through holes (16') of said jaws (13) to be screwed to said respective second securing nut (16).

2. System (10) according to claim 1, **characterised in that** said first securing nut (15) is of the M5 type.

3. System (10) according to claim 1, **characterised in that** said second securing nut (16) is of the M6 type.

4. System (10) according to claim 1, **characterised in that** said first and second housing seats are with shape and size equal to those of said securing nuts (15, 16).

5. System (10) according to claim 1, **characterised in that** said fixing plate (17) is secured onto said jaws (13) around said ball pawl (3) through at least two first screws (15"') passing through said first through holes (15") of said fixing plate (17) and said first through holes (15') of said jaws (13) to be screwed to said respective first securing nut (15).

6. System (10) according to claim 5, **characterised in that** said first screw (15"') is of the M5 type.

7. System (10) according to claim 1, **characterised in that** said second screw (23) is screwed to said second securing nut (16) by interposing at least one ball washer (24).

8. System (10) according to claim 1, **characterised in that** said second screw (23) is of the M6 type.

9. System (10) according to claim 1, **characterised in that** it comprises a covering casing (40).

## Patentansprüche

1. Befestigungssystem (10) von Mehrzweckstangen für Fahrzeuge, die insbesondere mit Vorrüstungen in Form von Kugelgriffen (3) ausgestattet sind, das folgendes einschließt:
- eine Befestigungsbasis (11), die dazu dient, am genannten Kugelgriff (3) befestigt zu werden, die genannte Befestigungsbasis (11) ist aus mindestens zwei Spannbacken (13) zusammengesetzt, jede dieser Spannbacken (13) hat ihr Endstück in einer Aufnahme (13a), die mindestens einen Teil der Form des genannten Kugelgriffs (3) ergänzt, jede der genannten Spannbacken (13) ist an einer ihrer unteren Seiten mindestens mit einer ersten Aufnahme für mindestens eine Befestigungsmutter (15) und mit mindestens einer zweiten Aufnahme für eine zweite Befestigungsmutter (16) ausgestattet, die genannte erste und zweite Aufnahme entsprechen den entsprechenden ersten (15') und zweiten (16') Durchgangsbohrungen, die aus einer oberen Seite der genannten Spannbacke (13) herauskommen, die genannte Befestigungsbasis (11) enthält eine Befestigungsplatte (17) der genannten Spannbacken (13) am genannten Kugelgriff (3), die genannte Befestigungsplatte (17) ist mit ersten (15") und zweiten (16") Durchgangsbohrungen ausgestattet, die mit den genannten ersten (15') und zweiten (16') Durchgangsbohrungen der genannten Spannbacken (13) übereinstimmen;
- mindestens einen Stützsockel (21), der dazu dient, die genannte Befestigungsbasis (11) zu stützen; und
- einem Fuß (30) der genannten Mehrzweckstange mit einer Aufnahme (31) an mindestens einer Oberfläche (21b) des genannten Stützsockels (21), der genannte Fuß (30) wird an der genannten Befestigungsbasis (11) durch Dazwischenlegen des genannten Stützsockels (21) befestigt;
und ist **dadurch gekennzeichnet, dass**:
- der genannte Stützsockel (21) mit dritten Durchgangsbohrungen (16"') ausgestattet ist, die mit den genannten zweiten Durchgangsbohrungen (16") der genannten Befestigungsplatte (17) und den genannten zweiten Durchgangsbohrungen (16') der genannten Spannbacken (13) übereinstimmen;
- die genannte Aufnahme (31) mit vierten Durchgangsbohrungen (16"") ausgestattet ist, die mit den genannten dritten Durchgangsbohrungen (16"') des genannten Stützsockels (21) übereinstimmen; und
- der genannte Fuß (30) an der genannten Befestigungsbasis (11) mit mindestens zwei zweiten Schrauben (23) befestigt ist, die die genannten vierten Durchgangsbohrungen (16"") durchlaufen, die genannten dritten Durchgangsbohrungen (16"') des genannten Stützsockels (21), die genannten zweiten Durchgangsbohrungen (16") der genannten Befestigungsplatte (17) und die genannten zweiten Durchgangsbohrungen (16') der genannten Spannbacken (13) dienen dazu, an einer entsprechenden zweiten Befestigungsmutter (16) eingeschraubt zu werden.

2. System (10) gemäß Patentanspruch 1, das **dadurch gekennzeichnet ist, dass** die genannte erste Befestigungsmutter (15) vom Typ M5 ist.

3. System (10) gemäß Patentanspruch 1, das **dadurch gekennzeichnet ist, dass** die genannte zweite Befestigungsmutter (16) vom Typ M6 ist.

4. System (10) gemäß Patentanspruch 1, das **dadurch gekennzeichnet ist, dass** die genannte erste und zweite Aufnahme die gleichen Formen und Dimensionen wie die genannten Befestigungsmuttern (15, 16) haben.

5. System (10) gemäß Patentanspruch 1, das **dadurch gekennzeichnet ist, dass** die genannte Befestigungsplatte (17) auf den genannten Spannbacken (13) am genannten Kugelgriff (3) mit mindestens zwei ersten Schrauben (15"') befestigt wird, die durch die genannten ersten Durchgangsbohrungen (15") der genannten Befestigungsplatte (17) und die genannten ersten Durchgangsbohrungen (15') der genannten Spannbacken (13) durchlaufen, um an der genannten entsprechenden ersten Befestigungsmutter (15) eingeschraubt zu werden.

6. System (10) gemäß Patentanspruch 5, das **dadurch gekennzeichnet ist, dass** die genannte erste Schraube (15"') vom Typ M5 ist.

7. System (10) gemäß Patentanspruch 1, das **dadurch gekennzeichnet ist, dass** die genannte zweite Schraube (23) an der genannten zweiten Befestigungsmutter (16) durch Dazwischenlegen von mindestens einer Kugelscheibe (24) befestigt ist.

8. System (10) gemäß Patentanspruch 1, das **dadurch gekennzeichnet ist, dass** die genannte zweite Schraube (23) vom Typ M6 ist.

9. System (10) gemäß Patentanspruch 1, das **dadurch gekennzeichnet ist, dass** es einen Schutzkasten (40) enthält.

## Revendications

1. Système (10) de fixation de barres à usages multiples pour véhicules, en particulier munis d'adaptations en forme de cliquet sphérique (3), comprenant:
- une base de fixation (11) pouvant rester fixée audit cliquet sphérique (3), ladite base de fixation (11) étant composée d'au moins deux mâchoires (13), chacune des deux mâchoires (13) présentant, dans une de ses extrémités, un logement (13a) complémentaire et au moins une partie de la forme dudit cliquet sphérique (3), chacune des deux mâchoires (13) étant pourvue, dans une face inférieure, d'au moins un premier siège de logement d'au moins un premier écrou de fixation (15) et d'au moins un second siège de logement d'au moins un second écrou de fixation (16), lesdits premier et second sièges de logement correspondant aux respectifs premiers (15') et seconds (16') trous passants débouchant sur une face supérieure de ladite mâchoire (13), ladite base de fixation (11) comprenant une plaque de fixation (17) de ladite mâchoire (13) autour dudit cliquet sphérique (3), ladite plaque de fixation (17) étant pourvue de premiers (15") et seconds (16") trous passants coïncidant avec lesdits premiers (15') et seconds (16') trous passants de ces mâchoires (13);
- au moins un socle de support (21) capable d'aller en appui sur ladite base de fixation (11); et
- un pied (30) de ladite barre à usages multiples, avec un siège d'appui (31) à au moins une surface supérieure (21b) dudit socle de support (21), ledit pied (30) étant fixé à ladite base de fixation (11) avec l'interposition dudit socle de support (21);
**caractérisé en ce que**:
- ledit socle de support (21) est pourvu de troisièmes trous passants (16"') qui coïncident avec lesdits seconds (16") trous passants de ladite plaque de fixation (17) et avec lesdits seconds trous passants (16') desdites mâchoires (13);
- ledit siège d'appui (31) est muni de quatrièmes trous passants (16"") qui coïncident avec lesdits troisièmes trous passants (16"') dudit socle de support (21); et
- ledit pied (30) est fixé à la base de fixation (11) au moyen d'au moins deux secondes vis (23) passantes à travers lesdits quatrièmes trous passants (16""), lesdits troisièmes trous passants (16"') dudit socle de support (21), lesdits seconds trous passants (16") de ladite claque de fixation (17) et lesdits seconds trous passants (16') desdites mâchoires (13) pour se visser à un second écrou de fixation correspondant (16).

2. Système (10) selon la revendication 1, **caractérisé en ce que** ledit premier écrou de fixation (15) est du type M5.

3. Système (10) selon la revendication 1, **caractérisé en ce que** ledit second écrou de fixation (16) est du type M6.

4. Système (10) selon la revendication 1, **caractérisé en ce que** lesdits premier et second sièges de logement sont identiques en forme et en dimensions à ceux desdits écrous de fixation (15, 16).

5. Système (10) selon la revendication 1, **caractérisé en ce que** ladite plaque de fixation (17) est fixée sur lesdites mâchoires (13) autour dudit cliquet sphérique (3) à l'aide d'au moins deux premières vis (15"') passantes à travers lesdits premiers trous passants (15") de ladite plaque de fixation (17) et lesdits premiers trous passants (15') desdites mâchoires (13) pour se visser audit premier écrou de fixation correspondant (15).

6. Système (10) selon la revendication 5, **caractérisé en ce que** ladite première vis (15"') est du type M5.

7. Système (10) selon la revendication 1, **caractérisé en ce que** ladite seconde vis (23) est vissé audit second écrou de fixation (16) au moyen de l'interposition d'au moins une rondelle sphérique (24).

8. Système (10) selon la revendication 1, **caractérisé en ce que** ladite seconde vis (23) est du type M6.

9. Système (10) selon la revendication 1, **caractérisé en ce qu'**il comprend une coiffe de couverture (40).
